# Europäisches Patentamt
## European Patent Office
## Office européen des brevets

(19)

(11) Numéro de publication: **0 125 175**
**B1**

(12)

# FASCICULE DE BREVET EUROPÉEN

(45) Date de publication du fascicule du brevet:
08.04.87

(51) Int. Cl.⁴: **B 26 D 1/60,** B 23 D 25/04

(21) Numéro de dépôt: **84400884.7**

(22) Date de dépôt: **02.05.84**

(54) Dispositif de tronçonnage pour tubes de carton fabriqués en continu.

(30) Priorité: **10.05.83 FR 8307802**

(43) Date de publication de la demande:
**14.11.84 Bulletin 84/46**

(45) Mention de la délivrance du brevet:
**08.04.87 Bulletin 87/15**

(84) Etats contractants désignés:
**AT BE CH DE GB IT LI LU NL SE**

(56) Documents cité:
**DE-A-2 231 089**
**DE-A-2 738 136**
**FR-A-370 582**
**FR-A-626 275**
**FR-A-1 599 934**
**US-A-3 254 549**

(73) Titulaire: **LHOMME SA (Société anonyme), Route de Paris, F-89140 Pont sur Yonne (FR)**

(72) Inventeur: **Languillat, Jean- Paul, Vallieres par Thorigny sur Oreuse- 89260 (FR)**

(74) Mandataire: **Chambon, Gérard, Cabinet Chambon 6 et 8 avenue Salvador Allende, F-93804 Epinay- sur- Seine Cédex (FR)**

EP 0 125 175 B1

LIBER, STOCKHOLM 1987

## Description

L'invention concerne un dispositif de tronçonnage pour les tubes de carton fabriqués en continu.

Il est connu de fabriquer des tubes de carton par enroulement en hélice d'une pluralité de bandes de papier ou de carton sur une machine dite "spiraleuse".

Ce type de machine comporte un mandrin cylindrique fixe sur lequel viennent s'enrouler en hélice une ou plusieurs bandes préalablement encollées (sauf la première) et qui font des angles déterminés avec l'axe dudit mandrin, le tube formé étant entraîné en rotation et simultanément en translation longitudinale, par une courroie sans fin effectuant un tour mort autour dudit tube formé.

Chaque tube de carton ainsi fabriqué en continu est tronçonné pendant sa formation en tubes unitaires, dans un poste de coupe ou de tronçonnage.

Tous les dispositifs de tronçonnage ont un fonctionnement cyclique réglé en fonction de la vitesse d'avancement du tube formé et de la longueur des tronçons à obtenir.

Il est évidemment nécessaire que les moyens de coupe suivent le tube au moment de tronçonnage de manière à obtenir une coupe selon une section droite c'est-à-dire selon un plan perpendiculaire à l'axe du tube.

Certains systèmes connus comportent une scie circulaire montée sur un chariot mobile et des moyens pour faire plonger la scie dans le tube, ces derniers et l'entraînement du chariot étant asservis de manière telle que la scie puisse pénétrer dans le tube au moment voulu et suivre ledit tube pendant son action de sciage.

Un autre système connu consiste à asservir une scie selon un mouvement tournant cyclique de manière telle que la période dudit mouvement soit fonction de la vitesse d'avancement du tube et de la longueur des tronçons à obtenir et qu'un mouvement longitudinal de la scie se fasse pendant le sciage sensiblement à la même vitesse que l'avancement du tube.

Toutefois ces dispositifs connus à scies sont dangereux et présentent des inconvénients en ce qui concerne la qualité de la coupe (bavures, poussières..).

C'est pourquoi il a été imaginé des systèmes plus performants utilisant des couteaux circulaires qui coopèrent avec un mandrin d'appui disposé à l'intérieur du tube de carton.

De tels systèmes permettent de débiter à chaque cycle de fonctionnement un ou plusieurs tronçons de tube coupés selon une section droite et pratiquement sans bavures.

Les systèmes connus de tronçonnage à couteaux comportent généralement trois sortes d'éléments:

a) des éléments porteurs et de guidage du tube de carton sous forme de rouleaux et galets cylindriques.

b) un mandrin d'appui cylindrique disposé à l'intérieur du tube et qui est généralement en métal très dur.

c) des molettes ou couteaux de coupe en forme de disques qui sont fixés sur des supports rigides ou élastiques.

Ces trois sortes d'éléments (a, b, c) sont reliés mécaniquement entre eux et l'un de ceux-ci ou deux ou les trois sont motorisés selon leur axe de rotation afin de favoriser le tronçonnage au moment de la pénétration des couteaux dans la paroi du tube en carton.

Pendant le tronçonnage, l'ensemble de ces éléments est soumis à un déplacement longitudinal synchronisé en vitesse avec celle de l'avancement du tube.

Ce déplacement est obtenu par des moyens d'actionnement électriques, hydrauliques, pneumatiques etc. dont l'action est réglée proportionnellement soit à la vitesse de fonctionnement des moyens d'entraînement du tube, soit à la vitesse de déroulement des bandes de papier ou de carton.

Le déplacement de l'ensemble des moyens précités est parfois obtenu à partir d'un élément de référence du tube et, dans ce cas, un lecteur suit cet élément de référence de manière à capter et envoyer des informations vers les organes de commande des moyens d'actionnement qui génèrent ledit déplacement.

En outre la pénétration des couteaux dans le tube jusqu'à ce qu'ils rencontrent le mandrin d'appui, est assurée par d'autres moyens d'actionnement hydrauliques, pneumatiques, mécaniques ou électriques.

Dans le brevet US-A- 3,254,549, la pénétration des couteaux est obtenue par des systèmes de cames, au cours du mouvement d'un convoyeur à bande sans fin, sur lequel lesdits couteaux sont montés et qui est motorisé et asservi au mouvement d'avancement du tube. Ce document a servi de base pour l'élaboration du préambule de la revendication 1.

Le brevet Français -A- 626.275 concerne un dispositif pour tronçonner les tubes métalliques. Dans ce dispositif, la lame de coupe est montée sur un chariot entraîné en translation dans un sens, par l'extrémité libre du tube métallique qui heurte une butée fixe reliée rigidement audit chariot. La lame est ici motorisée en rotation et elle peut être actionnée au moment voulu par un levier à main.

Tous ces moyens sont complexes, onéreux et/ou d'une sécurité discutable.

L'un des buts de l'invention est de proposer un dispositif plus simple et donc plus fiable, moins onéreux à la fabrication et pour la maintenance, et présentant une grande sécurité.

Le dispositif de tronçonnage selon l'invention, qui comporte des moyens de guidage du tube formé, au moins un couteau disposé perpendiculairement à l'axe du tube sur un chariot mobile, un mandrin d'appui disposé dans le tube formé, et des moyens d'actionnement des couteaux pour les faire pénétrer dans la paroi du tube au cours du mouvement dudit chariot, est remarquable en ce que le chariot mobile porte-couteaux est guidé en translation longitudinale et entraîné dans le sens d'avancement du tube par la poussée qu'exerce l'extrémité libre de ce dernier, au cours de son avancement, sur un élément relié audit chariot, et que les moyens d'actionnement des couteaux comportent au moins un support portant au moins un couteau, le support étant articulé sur le chariot et sollicité initialement vers une position écartée du tube, tandis que ledit support est muni de moyens destinés à coopérer, au cours et sous l'action du mouvement translatif d'avancement du chariot, avec des moyens conjugués aménagés sur une partie fixe, de manière à faire basculer le support perpendiculairement à l'axe du tube et obtenir l'approche du ou des couteaux et la pénétration de ceux-ci dans la paroi du tube, l'écartement ultérieur du ou des couteaux par rapport au tube étant obtenu par le basculement inverse dudit support, d'autres moyens étant en outre prévus pour entraîner en translation inverse le retour du chariot vers sa position initiale, après chaque tronçonnage.

Avantageusement, le mandrin d'appui intérieur est rendu entièrement libre pendant l'action de tronçonnage des couteaux, de telle sorte qu'il est entraîné pendant cette phase en translation et en rotation par le tube lui-même par contact dudit mandrin avec la paroi interne du tube, des moyens étant prévus pour le retour du mandrin vers sa position initiale après chaque tronçonnage.

Un tel dispositif est donc particulièrement simple et original puisque c'est l'action du tube lui-même qui au cours de son avancement commande et synchronise le fonctionnement des couteaux.

Par rapport aux systèmes classiques il supprime un nombre important d'éléments (moyens d'actionnement, capteurs..).

La mise en place d'un tel dispositif sur les machines existantes ne pose aucune difficulté, les réglages sont simplifiés, les capacités en diamètre et en épaisseur sont importantes.

En outre il présente une grande sécurité, puisque les couteaux ne peuvent être actionnés que s'il existe un tube en cours de fabrication.

De nombreux moyens particuliers, permettant notamment la pétration des couteaux et la traction pour le retour du mandrin d'appui sont en outre préconisés.

L'invention sera bien comprise et bien d'autre particularités apparaitront à la lecture de la description qui va suivre et qui se réfère aux dessins annexés dans lesquels:

- la figure 1 montre en perspective un dispositif selon l'invention,

- la figure 2 est une vue en perspective de trois-quart avant d'une partie d'un dispositif légèrement différent de celui de la figure 1,

- la figure 3 est une vue de dessus selon la flèche a de la figure 1,

- la figure 4 montre plus en détail les galets de guidage et d'éjection représentés sur la figure 1.

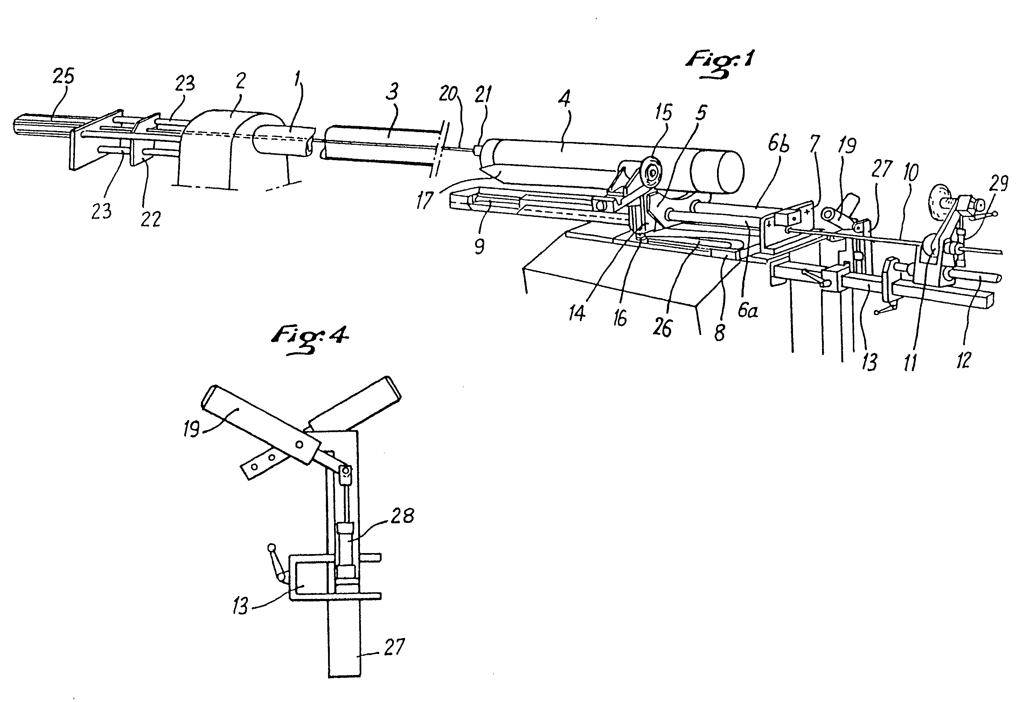

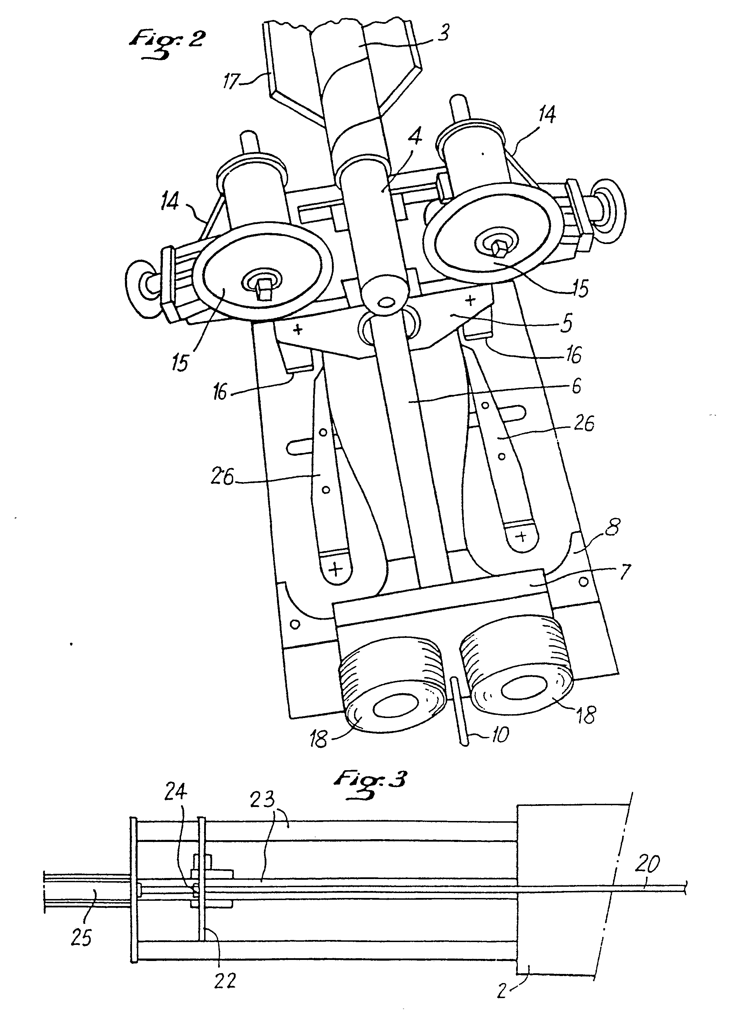

Bien que les figures 1 et 2 concernent des dispositifs légèrement différents, les éléments semblables ou de même fonction portent les mêmes références.

Le dispositif représenté comporte de manière connue un mandrin fixe d'enroulage 1 tubulaire, fixé dans un support 2 (figure 1).

Les bandes de papier ou de carton viennent s'enrouler sur le mandrin 1 pour former un tube en continu représenté en 3 (les bobines de papier et les moyens d'avancement du tube 3 qui ne font pas partie de l'actuelle invention ne sont pas représentés).

Un mandrin d'appui en matière assez dure, mais choisie pour ne pas émousser les couteaux dont il sera question ci-après, est représenté en 4.

Le dispositif de coupe proprement dit, comporte un chariot 5 aménagé de manière à pouvoir se déplacer longitudinalement selon l'axe du tube 3 entre une position d'attente montrée sur les figures 1 et 2 et une position plus avancée en étant guidé par une tige de guidage 6 (figure 2) ou deux tiges 6a et 6b (figure 1) solidaires d'une plaque verticale 7, elle-même fixée sur une plaque horizontale fixe 8.

Le chariot 5 est mû par un vérin 9 et il est fixé par une tige 10 traversant la plaque avant 7, à une butée 11 montée coulissante sur une tige 12 d'un support 13 (figure 1).

De chaque côté du chariot 5 est articulé un support porte couteaux 14.

Chaque support 14 est articulé dans sa partie médiane sur le chariot 5 et porte d'une part, à l'une de ses extrémités une monture réglable munie d'un couteau 15 en forme de disque disposé libre en rotation selon un plan sensiblement perpendiculaire à l'axe du tube 3 et, d'autre part, à son autre extrémité un galet 16.

Les couteaux 15 sont disposés dans le même plan et les supports 14 sont sollicités élastiquement vers la position montrée sur les figures 1 et 2 dans laquelle les couteaux sont écartés l'un de l'autre d'une longueur au moins égale au diamètre du tube 3.

Des moyens de guidage sont prévus pour le tube 3 sous forme par exemple d'une gouttière 17, de rouleaux 18 (figure 2 et non représentés sur la figure 1) généralement réglable en hauteur et de galets en V 19 (figure 1).

Le mandrin d'appui 4 est arrimé à son extrémité postérieure à une tige 20 par l'intermédiaire d'une attache 21 tel un émérillon qui permet une rotation libre dudit mandrin.

Le mandrin 4 est destiné à être logé dans le tube 3 et la tige 20, également logé dans le tube 3, traverse le mandrin tubulaire d'enroulage 1, son support 2 et une plaque 22 montée coulissante sur des guides 23.

L'extrémité de la tige 20 est munie d'une butée 24 (figure 3) de telle sorte qu'elle peut coulisser dans la plaque 22, mais aussi être tirée par celle-ci qui comporte en outre éventuellement au niveau du passage de la tige 20 une partie basculante de montage et démontage.

La plaque 22 est en outre fixée à l'extrémité de la tige d' un vérin 25 (figure 1 et 3).

Il est toutefois possible de fixer directement la tige 20 à l'extrémité de la tige du vérin 25 sans l'intermédiaire de la plaque coulissante 22 et de remplacer par un câble la totalité ou au moins une partie de la tige 20, et de préférence alors dans sa zone arrimée au mandrin 4, pour des raisons qui seront précisées ci-après.

Comme le montre surtout la figure 2, la plaque 8 est pourvue de deux cames 26 aménagées dans des parties évidées de ladite plaque et articulées de manière pivotante en étant sollicitées élastiquement dans la position montrée pour venir en butée sur une partie non évidée de ladite plaque 8.

Les galets de guidage 19 qui sont montés sur le support 13 au moyen d'une monture 27 (figures 1 et 4) sont en outre munis d'un vérin d'éjection 28 et de même la butée 11 est également équipée d'un vérin 29 dont les fonctions apparaîtront ci-après.

Les divers moyens constitutifs du dispositif ayant été décrits, le fonctionnement est simple à comprendre.

Le mandrin d'appui 4 est introduit dans le tube 3 en cours de fabrication, au voisinage de son extrémité libre.

Le mandrin 4 est rendu libre au début du cycle de tronçonnage de telle sorte qu'il progresse vers l'avant et tourne avec le tube 3 dans lequel il est en contact (sur la figure 2, le mandrin 4 dépasse du tube 3 pour permettre de le visualiser mais au début du cycle de tronçonnage, c'est le tube 3 qui dépasse le mandrin 4).

Le tube 3 est guidé par la gouttière 17, les rouleaux 18 et les galets 19, et son extrémité frontale vient au cours de sa progression au contact de la butée 11 et pousse cette dernière qui, en se déplaçant sur la tige 12 entraîne le chariot 5 au moyen de la tige 10. La longueur de la tige 10 entre le chariot 5 et la butée 11 est réglable en fonction de la longueur désirée pour chaque tronçon.

Le chariot est alors entraîné en translation par l'action même du tube 3 et donc identiquement à la même vitesse.

Comme le montre mieux la figure 2, les galets 16 des supports 15 rencontrent au cours de ce mouvement, les cames 26.

Les cames 26 présentent d'abord une forme divergente par rapport à l'axe du tube et selon le sens de l'avancement de telle sorte que les galets qui roulent sur cette partie des cames entraînent un basculement des supports 14 et provoquent un rapprochement des couteaux 15 vers le tube 3.

Les cames 26 présentent ensuite une partie moins divergente qui correspond à la phase de pénétration des couteaux dans la paroi du tube jusqu'à rencontrer le mandrin d'appui 4. Cette partie peut même être sensiblement parallèle à l'axe du tube si la première partie est suffisante pour entraîner une pénétration complète dans le tube. Il est important de noter que les couteaux 15 sont libres en rotation et qu'ils sont entraînés par la rotation du tube lui-même.

En arrivant en bout de came, les supports 14 pivotent élastiquement dans l'autre sens entraînant ainsi l'écartement des couteaux.

Pratiquement à ce moment le vérin 29 fait basculer la butée 11 et le vérin 9 entraîne le chariot 5 dans un mouvement inverse vers sa position initiale, les galets 16 passant derrière les cames 26 qui pivotent.

Sensiblement au même moment, le mandrin 4 est tiré en arrière et le vérin 28 fait basculer l'un des galets 19 (figure 4) de telle sorte que le tronçon de tube qui vient d'être coupé peut-être récupéré en attendant le suivant.

Le recul du mandrin 4 est obtenu par l'action du vérin 25 qui tire sur la plaque 22 et par son intermédiaire et celle de la butée 24 (figure 3) tire sur la tige 20.

Pour permettre de libérer de nouveau le mandrin 4 pour le tronçonnage suivant, le vérin 25 pousse sur la plaque 22 de telle sorte que la tige 20 présente du champ pour coulisser dans la plaque 22 au rythme de la progression du tube 3 et du mandrin 4.

Comme il a été dit ci-avant, une partie au moins de la tige 20 peut être remplacée par un câble de telle sorte que le vérin 25 peut tirer sur le mandrin 4 et le lâcher brusquement en donnant du mou audit câble, la plaque 22 devenant alors inutile.

Le dispositif est ainsi de nouveau remis en place pour un nouveau cycle (la butée 11 et le galet 19 ayant entre temps repris leurs positions initiales).

La description qui précède montre bien que contrairement à l'art connu les éléments de guidage sont fixes et que l'actionnement translatif du chariot, la pénétration des couteaux, la rotation des couteaux et l'entraînement du mandrin d'appui sont obtenus par l'action directe ou transmise du tube lui-même. Les divers moyens nécessaires, bien que coopérant, sont dissociés mécaniquement entre-eux et ne sont pas motorisés.

Toutefois de très nombreuses variantes peuvent être imaginées sans sortir du cadre de l'invention telle que définie dans les revendications. C'est ainsi, par exemple, que le dispositif peut ne comporter qu'un seul couteau ou au contraire chaque support peut porter plusieurs couteaux et/ou le chariot peut comporter plusieurs supports de chaque côté de manière à exécuter plusieurs tronçons à la fois.

De même les cames 26 peuvent présenter une forme et une disposition ne nécessitant pas leur pivotement et bien que l'invention préconise de libérer le mandrin au moment du tronçonnage, celui-ci pourrait être asservi autrement...

Enfin il est bien sûr possible d'imaginer et de prévoir de nombreux aménagements: lanceur de chariot, amortisseur de retour etc.

En outre si l'invention concerne un dispositif de tronçonnage, ladite invention s'étend bien sûr aux tubes de carton provenant d'un tube de carton fabriqué en continu et qui est tronçonné au moyen d'un dispositif semblable à celui précédemment décrit.

## Revendications

1) Dispositif de tronçonnage pour tubes de carton fabriqués en continu sur une machine munie d'un mandrin fixe d'enroulage (1), sur lequel viennent s'enrouler une ou plusieurs bandes de carton ou de papier, et de moyens d'entraînement en rotation et simultanément en translation longitudinale du tube formé (3), dispositif comportant des moyens de guidage (17, 18, 19) du tube formé, au moins un couteau (15) disposé perpendiculairement à l'axe du tube sur un chariot mobile (5), un mandrin d'appui (4) disposé dans le tube formé, et des moyens d'actionnement des couteaux pour les faire pénétrer dans la paroi du tube, au cours du mouvement dudit chariot, dispositif caractérisé en ce que le chariot mobile (5) porte-couteaux est guidé en translation longitudinale et entraîné dans le sens d'avancement du tube par la poussée qu'exerce l'extrémité libre de ce dernier, au cours de son avancement, sur un élément relié audit chariot, et que les moyens d'actionnement des couteaux comportent au moins un support (14) portant au moins un couteau (15), le support étant articulé sur le chariot (5) et sollicité initialement vers une position écartée du tube, tandis que ledit support est muni de moyens destinés à coopérer, au cours et sous l'action du mouvement translatif d'avancement du chariot, avec des moyens conjugués aménagés sur une partie fixe (8), de manière à faire basculer le support perpendiculairement à l'axe du tube et obtenir l'approche du ou des couteaux et la pénétration de ceux-ci dans la paroi du tube, l'écartement ultérieur du ou des couteaux par rapport au tube étant obtenu par le basculement inverse dudit support, d'autres moyens (9) étant en outre prévus pour entraîner en translation inverse le retour du chariot vers sa position initiale, après chaque tronçonnage.

2) Dispositif selon la revendication 1, caractérisé en ce que le mandrin d'appui (4) intérieur est rendu entièrement libre pendant l'action de tronçonnage des couteaux, de telle sorte qu'il est entraîné pendant cette phase en translation et en rotation par le tube lui-même par contact dudit mandrin avec la paroi interne du tube (3), des moyens étant prévus pour le retour du mandrin vers sa position initiale après chaque tronçonnage.

3) Dispositif selon l'une des revendications 1 et 2, caractérisé en ce que l'élément relié audit chariot (5) est une butée mécanique (11) reliée à celui-ci par des organes de liaison (10) réglables en longueur en fonction de la longueur voulu pour chaque tronçon de tube, ladite butée étant aménagée de manière à pouvoir s'escamoter avant le retour du chariot.

4) Dispositif selon l'une des revendications 1 à 3, caractérisé en ce que chaque couteau (15) sous forme d'un disque est monté libre en rotation à l'une des extrémités de son support (14), l'autre extrémité de ce dernier étant pourvue d'un galet (16) tandis que ledit support est articulé sur le chariot (5) entre ses deux extrémités et que les moyens conjugués aménagés sur la partie fixe (8) comportent pour chaque support une came (26) destinée à coopérer avec ledit galet (16) et aménagée de manière à entraîner un mouvement de pénétration du couteau (15) par basculement dudit support et permettre un mouvement inverse d'écartement après chaque tronçonnage, la rotation du couteau étant obtenue par la rotation du tube lui-même.

5) Dispositif selon la revendication 4, caractérisé en ce que chaque came (26) présente au moins une partie de forme divergente par rapport à l'axe du tube et selon le sens d'avancement de manière à entraîner le basculement du support (14) correspondant et en conséquence l'approche et la pénétration du couteau (15) dans le tube (3).

6) Dispositif selon l'une des revendications 4 et 5, caractérisé en ce que chaque came (26) est articulée de manière à pouvoir pivoter et repose sur une partie fixe vers laquelle elle est sollicitée élastiquement de telle sorte que le galet (16) du support (14) passe derrière ladite came en la faisant pivoter lors du mouvement de retour du chariot (5).

7) Dispositif selon l'une des revendications 2 à 6, caractérisé en ce que le mandrin d'appui (4) est attelé à un système de traction qui est asservi de manière à exercer une traction de retour sur ledit mandrin, après chaque tronçonnage, et à cesser ensuite toute action pour rendre le mandrin libre de suivre le tube avec lequel il est en contact.

8) Dispositif selon la revendication 7, caractérisé en ce que le système de traction du mandrin d'appui (4) comporte une tringle (20) et/ou un câble disposés dans le tube (3) en formation, en traversant le support (2) du mandrin fixe d'enroulage (1) ainsi que ce dernier qui est à cet effet tubulaire tandis que la tringle et/ou le câble sont reliés d'une part audit mandrin d'appui par une attache (21) permettant une rotation libre du mandrin et, d'autre part, à la tige d'un vérin (25) qui est disposé derrière le support (2) du mandrin d'enroulage (1) et qui est éventuellement pourvu d'un moyen d'échappement (22) aménagé pour libérer brusquement tout effet sur le mandrin d'appui.

## Patentansprüche

1. Vorrichtung zum Schneiden von ununterbrochen hergestellten Rohren aus Pappe auf einer Maschine, die mit einem festen Wickeldorn (1) versehen ist, auf welchen sich ein oder mehrere Bänder aus Pappe oder Papier aufwickeln, und mit Antriebsmitteln zur Drehung und gleichzeitigen Längsbewegung des gebildeten Rohres (3), sowie Führungsmitteln (17, 18, 19) für das gebildete Rohr, mindestens einem senkrecht zur Achse des Rohres auf einem beweglichen Wagen (5) angeordneten Messer (15), einem in dem gebildeten Rohr angeordneten Stützdorn (4) und Mitteln zur Betätigung der Messer derart, daß sie im Verlauf der Bewegung besagten Wagens in die Wand des Rohres eindringen, dadurch gekennzeichnet, daß der bewegliche Messerträger-Wagen (5) bei der Längsbewegung in Richtung des Rohrvorschubes geführt und angetrieben ist durch den Schub, den das freie Ende des Rohres bei seiner Vorwärtsbewegung auf ein mit besagtem Wagen verbundenes Bauteil ausübt und daß die Mittel zur Betätigung der Messer mindestens einen Support (14) aufweisen, der mindestens ein Messer (15) trägt, wobei der Support gelenkig am Wagen (5) befestigt ist und anfänglich in eine vom Rohr entfernte Stellung gebracht ist, und besagter Support mit Mitteln versehen ist, die dazu bestimmt sind, im Verlauf und unter der Wirkung der translatorischen Vorwärtsbewegung des Wagens mit zugeordneten, an einem festen Teil (8) angeordneten Mitteln derart zusammenzuwirken, daß sie den Support senkrecht zur Achse des Rohres schwenken und ein Annähern des oder der Messer an und deren Eindringen in die Wand des Rohres bewirken, wobei schließlich das Entfernen des oder der Messer vom Rohr durch eine inverse Schwenkbewegung besagten Supports bewirkt wird und daß außerdem weitere Mittel (9) vorgesehen sind, welche nach jedem Schneidvorgang die Rückkehr des Wagens in einer inversen Translationsbewegung in Richtung auf seine Anfangsposition bewirken.

2. Vorrichtung nach Anspruch 1, dadurch gekennzeichnet, daß der innere Stützdorn (4) während der Schneidbewegung der Messer vollständig freiläuft, derart, daß er während dieser Phase in Bezug auf Translation und Rotation durch das Rohr selbst aufgrund des Kontaktes des Stützdornes mit der Innenwand des Rohres (3) angetrieben wird, wobei Mittel zur Rückführung des Stützdorns nach jedem Schneidvorgang in Richtung auf seine Anfangsposition vorgesehen sind.

3. Vorrichtung nach den Ansprüchen 1 und 2, dadurch gekennzeichnet, daß das mit besagtem Wagen (5) verbundene Bauteil ein mechanischer Anschlag (11) ist, der mit dem Wagen durch in ihrer Länge in Abhängigkeit von der gewünschten Länge jedes Rohrabschnittes einstellbare Verbindungsorgane (10) verbunden ist, wobei besagter Anschlag derart eingerichtet ist, daß er vor der Rückkehr des Wagens eingezogen wird.

4. Vorrichtung nach einem der Ansprüche 1 bis 3, dadurch gekennzeichnet, daß jedes der scheibenförmigen Messer (15) frei drehbar an einem der Enden seines Supports (14) angeordnet ist, an dessen anderem Ende eine Rolle (16) angeordnet ist und besagter Support zwischen seinen beiden Enden gelenkig am Wagen (5) befestigt ist und daß die einander zugeordneten, am festen Teil (8) angeordneten Mittel für jeden Support eine Kurvenscheibe (26) aufweisen, die mit besagter Rolle (16) zusammenwirkt und so eingerichtet ist, daß sie durch Schwenken des Supports eine Eindringbewegung des Messers (15) bewirkt und eine inverse Bewegung zum Entfernen des Messers nach jedem Schneidvorgang zuläßt, wobei die Rotation des Messers durch die Rotation des Rohres selbst erreicht wird.

5. Vorrichtung nach Anspruch 4, dadurch gekennzeichnet, daß jede Kurvenscheibe (26) mindestens einen Teil aufweist, der in Bezug auf die Achse des Rohres und die Vorschubrichtung derart divigiert, daß das Schwenken des Supports (14) entsprechend bewirkt wird und als Folge davon das Annähern an und das Eindringen des Messers (15) in das Rohr (3).

6. Vorrichtung nach einem der Ansprüche 4 und 5, dadurch gekennzeichnet, daß jede Kurvenscheibe (26) gelenkig derart angeordnet ist, daß sie sich schwenken und an einen festen Teil anlegen kann, an den sie elastisch derart angedrückt wird, daß die Rolle (16) des Supports (14) hinter besagter Kurvenscheibe vorbeiläuft und sie bei der Rückwärtsbewegung des Wagens (5) zum Schwenken bringt.

7. Vorrichtung nach einem der Ansprüche 2 bis 6, dadurch gekennzeichnet, daß der Stützdorn (4) an einem Zugsystem angekoppelt ist, das derart gesteuert ist, daß es auf besagten Stützdorn nach jedem Schneidvorgang einen Zug nach rückwärts ausübt und daß es unmittelbar danach jede Einwirkung beendet und den Stützdorn freigibt, so daß er der Bewegung des Rohres, mit dem er in Kontakt ist, folgt.

8. Vorrichtung nach Anspruch 7, dadurch gekennzeichnet, daß das Zugsystem für den Stützdorn (4) eine Stange (20) und/oder ein Kabel aufweist, die innerhalb des gebildeten Rohres (3) angeordnet ist, wobei sie den Support (2) des festen Wickeldorns (1) sowie den zu diesem Zweck rohrförmig ausgebildeten Wickeldorn (1) durchdringt und die Stange und/oder das Kabel einerseits mit besagtem Stützdorn über eine eine freie Drehbarkeit des Stützdorns zulassende Befestigung (21) und andererseits mit der Stange einer Winde (25) verbunden ist, welche hinter dem Support (8) des Wickeldorns (1) angeordnet ist und die gegebenenfalls mit einem Ausrastmittel (22) versehen ist, welches so eingerichtet ist, daß es schlagartig den Stützdorn von jeder Einwirkung auf ihn befreit.

**Claims**

1. A cutting device for cardboard tubes made continuously on a machine fitted with a fixed winding mandrel (1) on which one or more strips of cardboard or paper are wound, and means for rotating and simultaneously longitudinally translating the tube formed (3), the device comprising guiding means (17, 18, 19) for the tube formed, at least one knife (15) disposed perpendicularly to the axis of the tube on a moving carriage (5), a supporting mandrel (4) disposed in the tube formed, and means for activating the knives to make them penetrate into the wall of the tube in the course of the movement of said carriage, the device being characterised in that the moving carriage (6) carrying the knives is guided in a longitudinal translating movement and driven in the direction of advance of the tube by the thrust exerted by the free end of the latter in the course of its forward movement on an element connected to said carriage, and in that the means for activating the knives comprise at least one support (14) carrying at least one knife (15), the support being articulated on the carriage (5) and drawn initially towards a position away from the tube, whereas said support is provided with means designed to cooperate with corresponding means provided on a fixed part (8) in the course of and under the action of the advancing translating movement of the carriage so as to tilt the support perpendicularly to the axis of the tube and bring the knife or knives up to and into the wall of the tube, the subsequent movement of the knife or knives away from the tube being obtained by tilting said support in the opposite direction, other means (9) also being provided to return the carriage to its initial position by means of a reverse translating movement after each cutting operation.

2. A device as in Claim 1, characterised in that the internal supporting mandrel (4) is liberated completely during the cutting action performed by the knives such that during this phase it is made to perform a translating movement and rotate by the tube itself through contact of said mandrel with the internal wall of the tube (3), means being provided to return the mandrel to its initial position after each cutting operation.

3. A device as in one of Claims 1 and 2, characterised in that the element linked to said carriage (5) is a mechanical stop (11) linked to the latter by linking parts (10) the length of which can be varied as a function of the length required for each section of tube, said stop being arranged in such a way as to be retractable before the carriage returns.

4. A device as in one of Claims 1 to 3, characterised in that each knife (15) in the form of a disk is mounted free to rotate at one of the ends of its support (14), the other end of the latter being provided with a roller (16) whereas said support is articulated on the carriage (5) between its two ends and whereas the corresponding means provided on the fixed part (8) comprise a cam (26) which is provided for each support and is designed to cooperate with said roller (16) and arranged in such a way as to make the knife (15) describe a penetrating movement by tilting said support and to permit an reverse outward movement after each cutting operation, the rotation of the knife being obtained through the rotation of the tube itself.

5. A device as in Claim 4, characterised in that each cam (26) exhibits at least one part divergent in form in relation to the axis of the tube and in the direction of advance so as to tilt the corresponding support (14) and consequently bring the knife (15) up to and make it penetrate into the tube (3).

6. A device as in one of Claims 4 and 5, characterised in that each cam (26) is articulated so as to be able to pivot and rests on a fixed part towards which it is drawn elastically such that the roller (16) of the support (14) passes behind said cam, pivoting it when the carriage (5) returns.

7. A device as in one of Claims 2 to 6, characterised in that the supporting mandrel (4) is hitched to a traction system which is controlled so as to exert a return pull on said mandrel after each cutting operation and then to cease all action to make the mandrel free to follow the tube with which it is in contact.

8. A device as in Claim 7, characterised in that the traction system of the supporting mandrel (4) comprises a rod (20) and/or a cable disposed in the tube (3) being formed, passing through the support (2) of the fixed winding mandrel (1) and the latter which is tubular to this end, whereas the rod and/or the cable are linked firstly to said supporting mandrel by an attachment (21) allowing free rotation of the mandrel, and secondly to the rod of a jack (25) which is disposed behind the support (2) of the winding mandrel (1) and which may be provided with a releasing means (22) arranged to allow a sudden release of any effect on the supporting mandrel.

*Fig:1*

*Fig:4*

0 125 175

Fig. 2

Fig. 3